# EUROPEAN PATENT APPLICATION

(11) **EP 4 714 617 A1**
(43) Date of publication of application: **25.03.2026**
(21) Application number: 24202378.6
(22) Date of filing: 24.09.2024
(51) Int. Cl.: B25J 15/00, B25J 15/02, G05B 19/00, H01B 13/012, H01R 43/28, H02G 1/00

(54) **ROBOTIC ELECTRICAL WIRE GRIPPING SOLUTION FOR AUTOMATED STRIPPING AND SPLICING OR WELDING**

(71) Applicant: Aptiv Technologies AG, 8200 Schaffhausen (CH)
(72) Inventor: FERREIRA DA SILVA, Marco Ruben Medeiros, 1675-072 Odivelas (PT)
(74) Representative: INNOV-GROUP

(57) **Abstract**

In an automatic splicing or welding installation comprising a wire holder (200) adapted to hold, in a pre-stripped state, wire segments (300) plugged in a given longitudinal alignment and in parallel extensions, as well as an automatic splicing or welding machine separate from the wire holder, a robotic arm is equipped with a robotic gripper for gripping pre-stripped wire segments in the wire holder, stripping the wire segments by forcibly withdrawing them from said wire holder, and bringing the stripped wire segments to the splicing or welding machine for splicing or welding them, while preserving the longitudinal alignment and the parallel extension of said wire segments. The gripper has a comb-like clamping wall structure (110a) comprising a series of parallel longitudinally extending and transversely spaced movable clamping walls (111), each pair of adjacent clamping walls forming a wire receiving passageway in which a wire segment can be gripped.

## Description

### BACKGROUND

### Technical Field

The present disclosure relates generally to the field of electric wires processing and assembly, and in particular to automated wire stripping and splicing or welding. This is of interest and finds applications, for example, in the industrial production of cable harnesses for the automotive industry in particular, for example, for the electrical distribution system of vehicles.

The invention relates more specifically to a robotic electrical wire gripping solution for automated, i.e. operator-independent stripping and splicing or welding.

### Related Art

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Reference DE102017206139 discloses an installation and method for the automated production of a cable set which has a branched structure and a plurality of individual line elements. In a modular set-up, the installation has two parts. A plurality of first processing stations are arranged in the first part, and a plurality of second processing stations are arranged in the second part. In the first part there is, inter alia, a cutting station for cutting the line elements to length from a reel and a stripping station for stripping the line ends of the line elements, arranged to operate automatic preparation of the individual line elements, which are then collected in a buffer station at the end of said first part. In the second part, the prepared individual line elements are assembled into the cable set. For that purpose, the line elements are plugged into connector casings in a connector station and transferred to second transporters. The branched structure of the cable set is then formed by displacement along second rails by means of said second transporters. In this spread-apart branched structure, inter alia, the line elements are fixed to one another in a fixing station. Further, a distribution station is arranged following the connector station and upstream of the fixing station for distributing the second transporters with the line elements held thereon into a predetermined distribution structure according to the branched structure of the cable set. The connector casings are moved by means of the second transporters to their end positions in accordance with the branched structure of the cable set, so that the cable set is spread out in a two-dimensional plane. The installation thus disclosed is very complex.

There is a need for an alternative solution for overcoming one or more drawbacks of the prior art, in particular with regard to:
- the convenience of being able to strip the ends of wires just before they are used for splicing or welding, particularly where electrical wires are made up of several individual strands which may extend in different directions (and which could be difficult to transport or store while preventing the individual strands from bending in various directions);
- the convenience of maintaining the pre-stripped wires in the same plugging configuration, and in particular without any change in longitudinal alignment or in parallel extension due to transportation from the auto-plugging area to the splicing/welding area of the workstation and due to stripping of the pre-stripped wire by pulling said pre-stripped wires out of the wire holder in which they are plugged; and/or,
- the problem of allowing automatic stripping and splicing or welding of wires having different cross-sections, *e*.*g*., ranging from 0,13 mm² to 2,5 mm².

### SUMMARY

Embodiments of the invention remedy all or some of the disadvantages of the above identified prior art.

In particular, the problem of stripping and splicing or welding pre-stripped wires of different cross-sections (for example from 0,13 mm² to 2,5 mm²) into a splicing or welding machine without losing longitudinal alignment and parallel extension of wires parallel extending along the transverse direction is solved by the design of a special wire gripper as claimed in independent claim 1.

More precisely, there is proposed a robotic wire gripper for gripping segments of sheathed electrical wire and presenting them to a splicing or welding machine, said wire gripper comprising:
- a comb-like clamping wall structure comprising a series of parallel longitudinally extending and transversely spaced clamping walls, each pair of adjacent clamping walls forming a wire receiving passageway in which a wire segment can be accommodated, said clamping walls being individually linearly movable along a transverse direction so that the pairs of adjacent clamping walls form releasable jaws for releasably gripping a wire segment near the pre-stripped end thereof,
- at least one controllable actuator for automated actuation of the clamping walls of the comb-like clamping wall structure in the transverse direction,
- a robot arm to which the comb-like wall structure and the actuator are fixed,
- a controller programmed to cause:
   o the controlled displacement of the wire gripper by the robot arm towards a wire holder in which are accommodated a plurality of pre-stripped wire segments aligned in a row,
   o the controlled raking of the wire segments by the comb-like clamping wall structure such that each wire segment is disposed into an associated wire receiving passageway between a respective pair of spaced apart clamping walls,
   o the controlled and releasable gripping of each of said wire segments between a pair of adjacent clamping walls, by reducing the mutual spacing between all pairs of adjacent clamping walls through actuation of the actuator,
   o the simultaneous controlled extraction by the robot arm of all the wire segments from the wire support once the said wire segments are pressed by the clamping walls of the gripper while the end part of the sheath of the wire segments is retained in the said wire support, so that the wires are all stripped at the same time when they are withdrawn from the wire support by the gripper, and
   o the presentation, by the robot arm, of the stripped wire segments (300) still gripped in the comb-like clamping wall structure, to the splicing or welding machine away from the wire holder, towards the splicing or welding machine, which preserves the longitudinal alignment and the parallel extension of the wire segments.

This allows a single robotic gripper to be used to extract the wires from the wire holder acting as a stripping tool to strip the end portion of all the electrical wires at once, and to bring the stripped wires to the splicing or welding machine without releasing them, so that the longitudinal alignment and parallel extension of the wires is not lost during this transport.

Further embodiments of the proposed solution as defined in the dependent claims.

A second aspect of the proposed solution relates to an automatic splicing or welding installation comprising:
- a wire holder dapted to hold, in a pre-stripped state, a set of wire segments plugged in in a given longitudinal alignment and determined parallel extensions,
- an automatic splicing or welding machine separate from the wire holder,
- a robotic arm equipped with a robotic gripper according to the first aspect, for gripping pre-stripped wire segments in the wire holder, stripping the wire segments by forcibly withdrawing them from said wire holder, and bringing the stripped wire segments to the splicing or welding machine for splicing or welding them, while preserving the longitudinal alignment and the parallel extension of said wire segments.

Finally, a third aspect relates to a method of presenting segments of sheathed electrical wire and presenting them to a splicing or welding machine, said method comprising using a robotic wire gripper according to the first aspect.

### BRIEF DESCRIPTION OF THE DRAWINGS

Embodiments of the present invention are illustrated by way of example, and not by way of limitation, in the figures of the accompanying drawings, in which:
- **Figure 1** is a simplified schematic view of an industrial robot workstation wherein embodiments of the invention can be implemented,
- **Figure 2** is a schematic view illustrating a wire holder in a context of use within an embodiment of the automated system of Figure 1, with electric wires to be processed plugged into it.
- **Figure 3** is an isometric perspective view illustrating details of a non-restrictive embodiment of the wire holder schematically shown in Figure 2.
- **Figure 4A** and **Figure 4B** are views showing a pre-stripped electrical insulated wire and illustrating the step of stripping the end portion of the insulating sheath of said pre-stripped wire, respectively.
- **Figure 5A** and **Figure 5B** are perspective views illustrating operation of the comb-like clamping wall structure upon raking wire segments according to embodiments of the present invention.
- **Figure 6A** and **Figure 6B** are schematic cross-sectional views illustrating the comb-like clamping wall structure of Figure 5A and Figure 5B with wires accommodated therein, in an unpressed position and in a pressed position, respectively.
- **Figure 7** is a perspective view of a compressed air actuator adapted to actuate the mobile clamping walls of the comb-like clamping wall structure.
- **Figure 8A** is an isometric perspective view showing a robot arm equipped with the robotic gripper according to the embodiment, and **Figure 8B** lis a similar view showing an alternative embodiment of the robotic gripper as shown in Figure 8A.
- **Figure 9** is an isometric perspective view showing an optional embodiment of the gripper as shown in Figure 8.
- **Figure 10** is a schematic illustration of the operational core of a splicing or welding machine.
- **Figure 11** is a partial isometric perspective view showing a splicing or welding machine as schematically illustrated in Figure 10, in a context of use with the robotic arm of Figure 8.

### DESCRIPTION OF PREFERRED EMBODIMENTS

The present disclosure relates to a robotic wire gripper configured to grip sheathed electrical wire segments at a wire holder acting as a stripping tool in which a plurality of pre-stripped wire segments aligned in a row are accommodated. When operated by a robotic arm, the gripper is further configured to strip the wire segments by pulling the wires out of the stripping tool, and then to move the stripped wire segments still held in the gripper, away from the wire holder, to a splicing or welding machine where the wire segments are spliced or welded. With the proposed embodiments of the gripper, the alignment of the wire segments extending longitudinally in parallel along a transverse direction is maintained between the time the wire segments are stripped and the time they are spliced or welded.

A method for automatic splicing or welding of electric wires using said robotic wire gripper is further disclosed.

The following figures and description illustrate specific exemplary embodiments of the invention. It is therefore obvious that those skilled in the art will be able to devise various arrangements which, although not explicitly described or illustrated herein, embody the principles of the proposed solution and are included within the scope of the claims. In addition, all examples described herein are intended to facilitate understanding of the principles of the solution and should be construed as not being limited to the examples and provisions specifically disclosed. Accordingly, the scope of the claims is not limited to the specific embodiments or examples described below, but only by the features set forth in the claims and their equivalents.

In the figures of the accompanying drawings, like reference numerals refer to same or similar elements. In addition, unless specifically stated otherwise, the disclosures contained in the entire description can be applied analogously to the same parts with the same reference signs or the same component identifiers.

In the following description, functions or constructions well-known by the one skilled in the art are not described in detail since they would obscure the description in unnecessary detail.

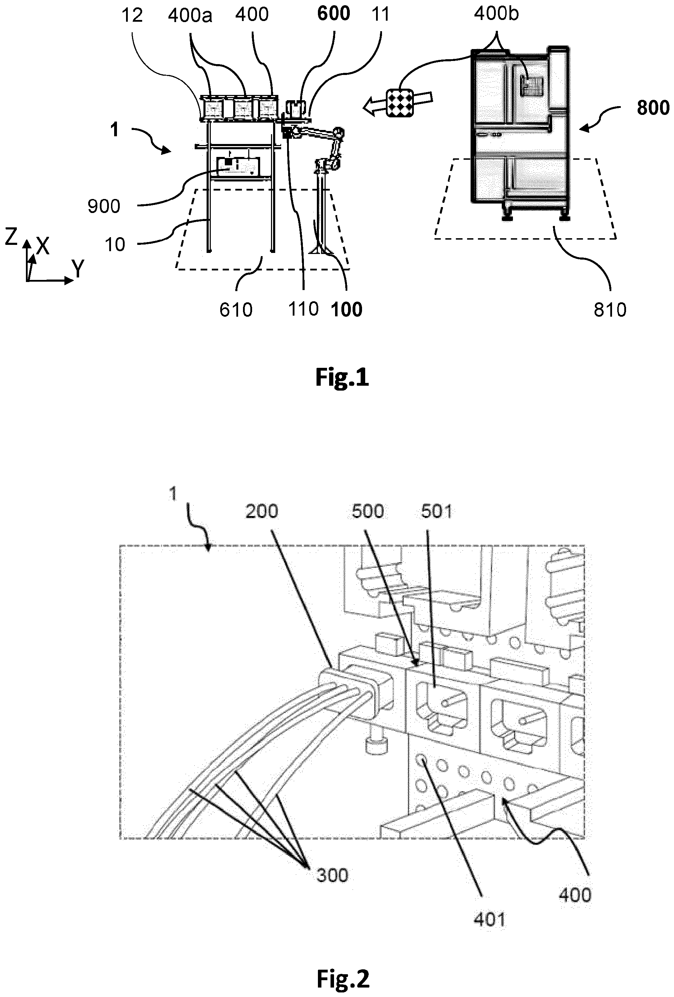

**Figure 1** schematically shows an automated industrial system wherein embodiments of the configurable robotic workstation 1 can be implemented.

The system comprises an automatic plugging machine 800, also referred to as an auto-plugging machine, which is adapted to carry-out automatic insertion of a set of electrical wire segments into one or more wire holders. These wire holders include the connectors of a wire harness under fabrication, as part of the wire harness manufacturing process, as well as so-called "dummy connectors" also referred to as stripping tools because they are involved in the process of stripping wires to be spliced or welded. According to embodiments of the present invention, the auto-plugging machine is adapted and used to automatically insert wire segments in the wire holders. The wire segments of said set of wire segments can have different cross-sections, even when they are intended for being used to manufacture a single harness or part of a harness.

In the shown example, the automatic plugging machine 800 is located in a plugging area 810 of a wire harness assembly line. For example, the auto-plugging machine 800 can incorporate one or more operational modules from the Omega suite of process modules for feeding, pre-processing and buffering wires for the cable harnesses to be manufactured, which are available from Komax AG, a Swiss company.

The robotic workstation 1 comprises a splicing or welding machine 600, and is located in a splicing or welding area 610, downstream of the plugging area 810 within the line of production. For example, the splicing or welding machine 600 can be a Minic-III^{™} wire welding machine or any other operational module from the Sonosystems^{®} suite, which are available from the German company Schunk Sonosystems GmbH.

For example, the robotic workstation 1 comprises a base frame (chassis) 10 with at least one table 11 on which the wire bonding machine 600 can be placed. The workstation 1 further comprise a conveyor 12 adapted to support and to let circulate pallets 400, 400a and 400b in the splicing or welding area 610, which are received from the auto-plugging area 810. In the shown example, pallet 400 is a pallet in position for processing at the splicing or welding area 610. Pallets 400a have are pallets the processing of which has been completed at the workstation 1, and which are waiting for being taken from the splicing or welding area 610. Finally, pallets 400b are pallets still upstream of the splicing or welding area 610, one being still used in the auto-plugging area 810, and the other being loaded with crimped connectors holding wires, and the process of being being transported from the auto-plugging area 810 to the splicing or welding area 610.

The robotic workstation 1 may further have a general unit 900, which is place for instance on another table of the chassis 10. The general unit 900 has a control unit, a processing unit, and/or a positioning unit for positioning the robotic arm 100, and/or the mobile gripper of said robotic arm. The general unit 900 can be configured to command the gripper 110 of the robot arm 100, the robotic arm 100 itself, the welding machine 600, and any other listed or non-listed components of the workstation 1. The general unit 900 may comprise a general electric power supply connection and/or a compressed air supply connection. The general unit 900 of the robotic workstation 1 of Figure 1 can further comprise a mapping unit for storing or receiving the position of the masks 700, as well as various detectors for tracking position of mobile component of the workstation, and/or for detecting position of wire harness elements of the wire harness(es) being fabricated.

According to embodiments, the operation of stripping wire segments before splicing or welding is carried out at level of the welding workstation which includes the splicing or welding machine 600. More particularly, stripping of each wire segments is performed by pulling the wire segments out of the wire holder, namely the "dummy connector" or stripping tool, in which it has been plugged by the auto-plugging machine 800, whereby a pre-stripped sheath end of the wire segment is removed from the rest of said wire segment.

Therefore, the set of wire segments to be spliced or welded by the splicing or welding machine 600 are received by the robotic workstation 1 from the automatic plugging machine 800, plugged into one or more of the above-mentioned "dummy connectors" or stripping tools. Stated otherwise, these wire holders with wire segments plugged therein must be transferred from the automatic plugging machine 800 at area 810 to the splicing or welding area 610, to be presented to the splicing or welding machine 600. The problem of carrying out this operation automatically is at the heart of the proposed solution as will become apparent from the below description of embodiments.

The operation of cutting wire segments to length from a plurality of reels, each storing continuous wires of given cross-sections, can be carried out on or at level of the automatic plugging machine 800, or upstream of said machine in the wire harness assembly line. This operation can be carried out automatically, using robotic tools commonly available on the market. It may also be carried out manually, by an operator. A description of this operation would be beyond the scope of the present description and will therefore not be developed here.

It will be noted that, whereas auto-plugging machine 800 for automatic insertion of electrical wires into the wire holders is presented here, embodiments of the present invention are not limited to this example. Indeed, the plugging of the wires into the wire holders can be performed manually by an operator. The invention fully accommodates with such manual plugging of the wires. What matters is that electric wire segments to be stripped and then to be spliced or welded, are received by the automated system 1 plugged into wire holders wherein they are aligned longitudinally, and placed in a row, in parallel, along a transverse direction (the term "transverse" being considered in relation to the longitudinal direction of extension of the wire segments).

**Figure 2** schematically illustrates a wire holder or "dummy connector" 200 in a context of use within the automated system of Figure 1, with electric wires 300 to be processed (namely to be stripped, and then to be spliced or welded) which are plugged into it. More specifically, Figure 2 illustrates a context of use of "dummy connectors" as stripping tools, wherein the proposed support device is not used.

Basically, such a wire holder 200 can be used to group together individual wire segments to form a set (or bundle) of wires for the manufacture of a given wire harness, or of a portion thereof. According to the embodiments described herein, the wire holder 200 further constitutes a pre-stripping and stripping tool, as well as a carrier for transporting the wire set from the plugging area 810 to the splicing or welding area 610, as will become clear in the following.

The stripping tool 200 is arranged to receive the electric wire segments 300 placed therein either manually by an operator or automatically by a robotic tool, as already mentioned above. The stripping tool 200 is removably placed on a rack 500, in a receiving rack portion 501 of said rack 500. The receiving rack portion 501 is typically called a connector holder.

In some embodiments, the rack 500 is placed on a pallet 400, and can be fixed to it by fixing means (*e*.*g*. fixing screw(s) screwed in fixing hole(s) 401 of the pallet 400 as shown. At the plugging area 801, the operator or the robotic plugging machine may take the electric wire segments 300, cut to length, for instance from a cutting machine or from a storage portion which can be positioned on the rack 500 itself, or in another receiving rack portion (not shown). Pallets 400b with one or more stripping tool 200 each holding a set of pre-stripped wire segments, can be transferred from the plugging area 810 to the splicing or welding area 610, downstream in the wire harness assembly line, either manually by an operator or by a conveyor of any appropriate type and configuration, as schematically illustrated by the thick white arrow in Figure 1. At the splicing or welding area 610, the stripping tools 200 are received in respective rack portions 501 of the rack 500 on a pallet 400, and sets of wire segments are pulled out from respective stripping tools 200, causing the end portion of the sheath to separate from the pre-stripped wires and hence the wire segments to be stripped.

With further reference again to Figure 1, indeed, the automated system 1 has a movable robot arm 100, which is able to grab a set of electric wire segments 300 from a wire holder 200 as shown in Figure 2, through a wire gripper 110 mounted on said robot arm 100. The wire gripper 110 can be pneumatically and/or electrically actuated.

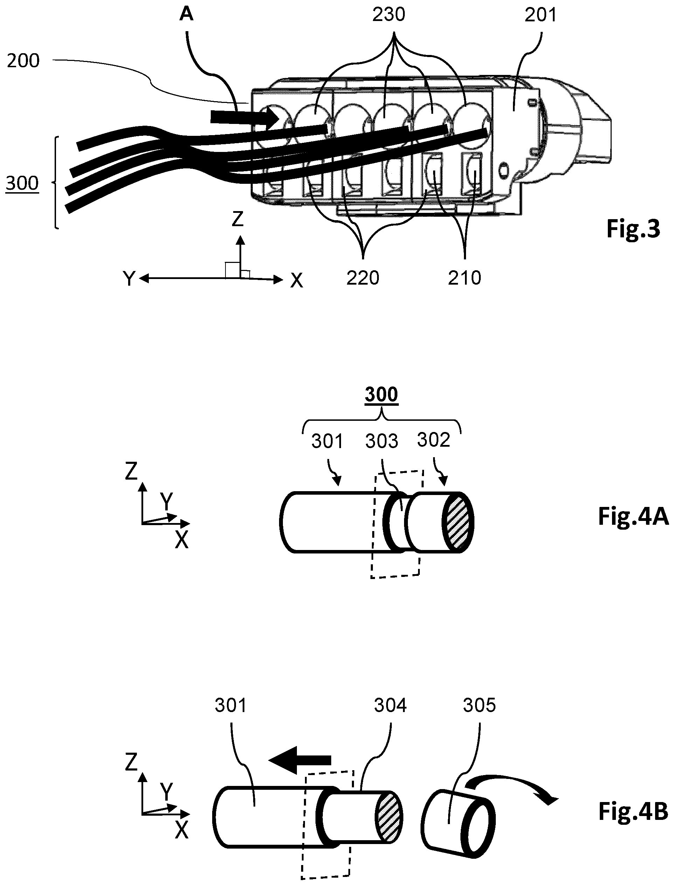

**Figure 3** illustrates, in an isometric perspective view, details of a possible, nonrestrictive embodiment of the stripping tool or wire holder 200 (or dummy connector) schematically shown in Figure 2.

Advantageously, the wire holder 200 (or dummy connector) as shown comprises several receiving parts, preferably two or more, preferably six or more. In this way, a plurality of electrical wire segments to be spliced or welded can be placed and received in a given positioning configuration. This improves productivity, particularly with regard to the problem of aligning, storing and gripping individual wire segments until they are spliced or welded together to form the intended harness element.

In Figure 3, the receiving portion each comprise a hollow space, which all extend in parallel. Therefore, a single black arrow A schematically represents the direction of insertion of any wire segment 300 into a respective receiving portion 230 of the wire holder 200. As shown, once inserted in the wire holder 200, the wires of the wire set 300 thus extend longitudinally parallel one to the others.

For the purpose of the description which follows, there is defined a direct three-dimensional orthogonal reference system XYZ, where X- and Y-axes form a horizontal plane XY, and where the X- and Z-axis form a vertical plane XZ perpendicular to said horizontal plane XY. By way of convention, this reference system XYZ is tied to the wire holder or stripping tool 200. As shown, the wire segments extend 300 parallel longitudinally along the direction of the longitudinal X-axis, and they are transversely spaced, aligning in a row along the transverse direction of the Y-axis.

The expression "three-dimensional space" (or 3D) characterizes the space surrounding the user, as perceived by his vision, in terms of width, depth and height. In mathematics, this notion corresponds to Euclidean geometry in space, according to which space is marked by three orthogonal axes, whereas a plane is made up of only two dimensions (2D) and is marked by only two of said three orthogonal axes. The three geometric dimensions thus are:
- length along the longitudinal X-axis, oriented by way of convention from the front to the rear;
- width along the transversal Y-axis; and,
- height along the vertical Z-axis, oriented by way of convention from the bottom to the top.

In addition, and unless explicitly stated otherwise, the terms and expressions in quotation marks below (and all derived terms, as well as semantically equivalent expressions) are used in the present disclosure according to the following convention:
- "rear" and "front", "behind" and "ahead", "backside" and "frontside", "backward" and "forward", and derivatives such as "in (the) front of", an "in the rear of" as well as associated verbs and derived nouns or expressions, are used in reference to the direction of the longitudinal axis X, which shall always correspond to the direction of insertion of an electrical wire into the main body 201 through the receiving portion 230 as illustrated by the arrow A in Figure 3, and which is oriented from the front to the rear on the figures of the drawings;
- "left", "right", "side" or "lateral", are used in reference to the direction of the transversal axis Y; and,
- "bottom" and "top", "below" and "above", "under" and "over", the verbs "to decline" and "to rise" and any derivatives, synonyms or equivalents, as well as the terms "superior" and "inferior", as well as associated verbs and derived nouns or expressions, are used in reference to the direction of the vertical axis Z, which is oriented from the bottom to the top on the figures of the drawings.

By extension, and although the gripper 110 may have different orientations in the three-dimensional space depending on the sequence of use, the aforementioned linguistic conventions are also used with respect to the geometry of the gripper 110 and the dynamic operation of its component parts. In other words, the aforementioned vocabulary will also be used in what follows with respect to the clamp and any of its components and is to be understood on the assumption that the clamp 110 is positioned with respect to the dummy connector 200 so as to operatively grip the wire segments 300 as they are plugged into said dummy connector 200.

For the sake of clarity, axes X, Y and/or Z of the above reference system XYZ are represented by respective arrows on the figures of the drawings, where appropriate.

Back to **Figure 3****,** in the example shown therein the main body 201 of the wire holder 200 comprises six wire receiving portions 230 which extend longitudinally along the direction of the X-axis, and adjacent to each other in a row along the transversal direction of the Y-axis. These number and arrangement are only an example. More receiving portions, or less receiving portions, can be provided depending on the wire harness to be manufactured. Further, the receiving portions can be arranged other than in one horizontal line as shown in Figure 3. For example, several receiving portions can be arranged in a matrix of rows superimposed along the vertical direction of the Z axis, for instance with a horizontal shift with respect to the transverse direction of the Y-axis. For example, said horizontal shift can be of half the pitch of the receiving portions 230 along the Y direction of the rows.

The wire holder 200 is shown in Figure 3 with, plugged therein, a set of e.g. four electric wire segments 300 to be stripped and then to be spliced or welded by the splicing or welding machine 600 to form the intended harness element.

An electric wire segment has an electric conductor covered by an insulating sheath. The electrical conductor can be monolithic or multi-strand. The dummy connector 200 is adapted to receive and hold the wires 300, and to cut and grab an end portion of their insulation jacket. That way the wire segments are pre-stripped in a way that when the gripper 110 actuated by the robot arm 100 pulls the wires out of the wire holder 200, the terminal sheath portion is removed and the wires are fully stripped, thus ready for splicing or welding. The cutting of the wire sheath to form pre-stripped wire segments will become more apparent from the below description of Figures 4A and 4B.

The wire holder 200 comprises a main body 201, for example made of plastic and formed, for example, by 3D printing. The main body 201 comprises one or more receiving portions 230 for individually receiving one or more electrical wire segments 300, cut to length and to be stripped, respectively. Stated otherwise, each receiving portion is preferably adapted to receive a respective one of the wire segments 300. The receiving portions are hollow portions which extend along the longitudinal direction of the X-axis. They each have abutments which, when wire segments are accommodated in the receiving portions, provide that the respective pre-stripped ends of the wire segments are aligned longitudinally.

For the purpose of grabbing the end portion of the insulation jacket of the pre-stripped wires, the main body 201 of the wire holder 200 further has slots 220, which are respectively associated to each one of the receiving portions 230. In embodiments as shown, any one of slots 220 is arranged under a respective one of the wire receiving portions 230.

Clamping levers such as lever 210 shown in Figure 3, can be arranged in each one of the receiving portions 230, respectively. The technical function achieved by these levers 210 is to clamp or pinch a wire after it has been introduced forcibly, that is with some force in an operative position within the corresponding receiving portion 230. To that end, each receiving portion 230 is in inner communication with its associated slot 220, so that at least the rear end of the corresponding lever 210 can contact and press the wire upwardly within said receiving portion against upper walls of the receiving portions 230. The terms "operative position" with respect to electrical wire(s) mean, in the context of the present description, a position, ready from stripping, plugged in the wire holder. In Figure 3, only the rear of the clamping levers 210 is visible and their mode of operation is not described in more detail so as not to obscure the present description by unnecessary details with regard to the wire gripping aspect which forms the basis of the embodiments of the invention.

With reference to **Figure 4A** and **Figure 4B****,** a pre-stripped wire is an electrical wire comprising a main insulated portion, a terminal insulated portion and a stripped portion situated therebetween, obtained by cutting the insulating sheath of the electrical wire into a main insulating sheath portion and a terminal sheath portion.

With reference, first, to **Figure 4A****,** the electric wires 300 each have an inner electric conductor covered by an insulating sheath. The electric wires 300 may have multiple (conductive) strands therein or a monolithic electric conductor, both generally in copper, or any other conductive material. The insultation or sheath could be in an insulative material, such as plastic or PVC ("polyvinyl chloride"). The electrical wires 300 each preferably have a main portion 301 which is insulated, a distal end portion 302 with insulation and a (pre-) stripped portion 303 between said main portion 301 and said end portion 302. The conductor at the distal end portion 302 is to be spliced or welded. The sheath surrounding the distal end 302 is circularly cut but not yet completely removed to facilitate insertion into the receiving part 230, i.e. the distal end of the wire is only partially stripped, which is why the wire is said to be 'pre-stripped'. The person skilled in the art will indeed appreciate that it is very useful to fully strip the distal end portion 302 just before using it for splicing or welding, in particular when the electrical wires 300 comprise several strands which may spread in various directions (and which may prove difficult to transport or store, for that reason).

In addition, the still sheathed end of the wires enables them to form an abutment part at the distal end of the pre-stripped wire, which abuts against the back of the wire receiving parts 230 of the wire holder 200, thus ensuring correct longitudinal alignment of said wires when they are all plugged into said wire holder. To that end, the back of the body 201 may have optional stop portions or final abutment portions associated with the receiving portions 230 to limit the insertion of the electric wire 300 as necessary.

When the gripper 110 is operated by the robot arm 100 (see Figure 1), it forcibly withdraw the electric wires 300 all together from the receiving portions 230 by pulling them backwards along the longitudinal direction of the X-axis, while the pre-stripped wires 300 keep being applied a stripping effort on the insulation of the end portion 302 by the levers 210. This will remove the insulation or sheath 305 from the end portion 302, as illustrated by **Figure 4B****,** so as to form a stripped end portion 304. As previously mentioned, this step takes place after the wire holder 200, containing the pre-stripped wires 300 hold therein, has been transported from the plugging area 810 to the welding or splicing area 610 by the operator or by a robotic arm, or by any other automated device (*e*.*g*. a device comprising a fully automatic conveyor).

The gripper enables all the wires plugged into a wire holder and extending parallel in their respective directions of longitudinal extension to be gripped at once, regardless of their number, for example irrespective of whether there is only one wire or whether there are 6 wires held in the said dummy connector 200, and regardless of the respective cross-sections of the wire segments 300. The movement of the robot head remains the same in all cases. Advantageously, the stripping of the wire segments caused by their removal as a group from the receiving portions 230 of the dummy connector 200 maintains both their alignment along the longitudinal direction and their relative positioning along the transverse direction unchanged.

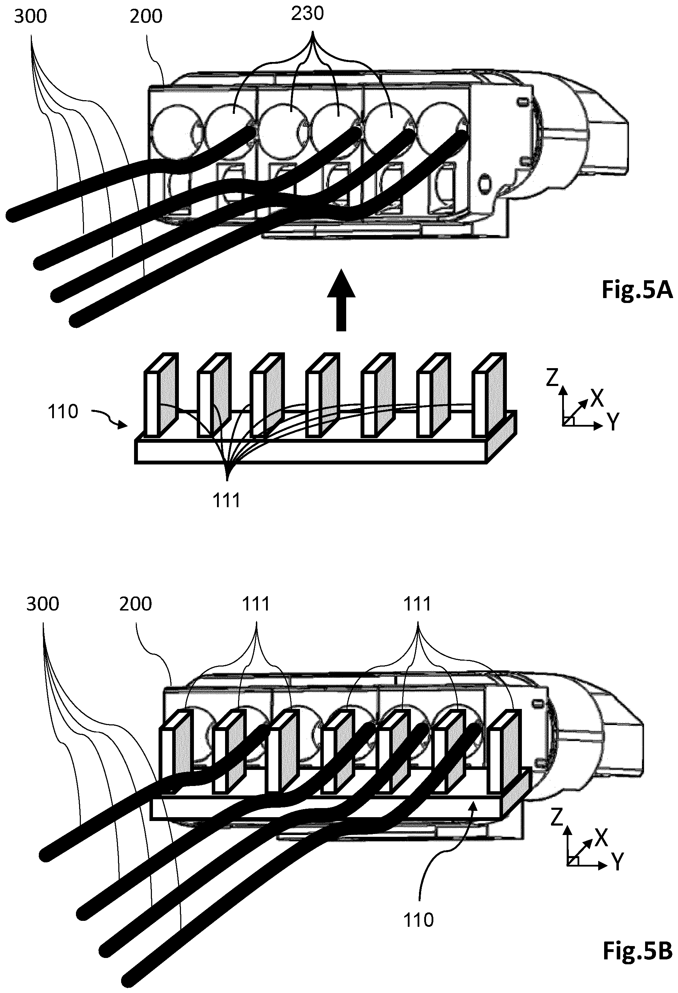

To that end, and with reference to **Figure 5A** and **Figure 5B****,** the gripper 110 has a comb-like structure 110a with a series of N+1 parallel longitudinally extending clamping walls 111, where N is the maximum number of wires which can be parallel fitted, *i.e*. accommodated in parallel in the wire holder 200. In the example of the wire holder 200 as shown in Figure 3, N equals six (*i*.*e*., N=6). The clamping walls 111 of the comb-like clamping wall structure 110a of the gripper 110 include, for instance, at least one fixed wall and a number N of mobile walls, said mobile walls being mobile in the transverse direction of the Y-axis (being recalled that "transverse direction" is meant relative to the longitudinal direction of extension of the wires along the X-axis). Each interval between two adjacent clamping walls thus forms with a variable width along the transverse direction of the Y-axis.

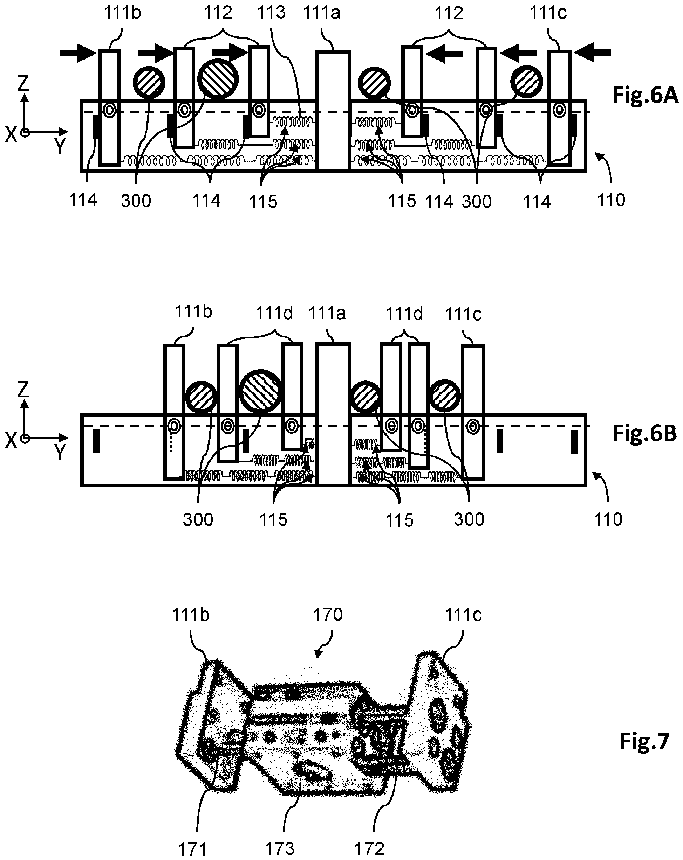

The clamping walls 111 are spaced apart transversely along the transverse direction of the Y axis. Each pair of adjacent clamping walls forms a wire-receiving passage in which a wire segment 300 can be accommodated, as shown in Figure 5B. In addition, at least some of the clamping walls are individually linearly movable along the transverse direction, as will become more apparent from the below description of Figure 6A and Figure 6B. Functionally, these pairs of adjacent clamping walls form releasable jaws, each adapted to releasably grip a respective wire segment 300, proximate to its pre-stripped end.

Under control by an ad-hoc control unit (not shown in the drawings) the wire gripper 110 is moved by the robot arm 100 towards the wire holder 200 in which are accommodated a plurality of pre-stripped wire segments 300 aligned in a row, as shown in **Figure 5A****.**

The control unit is programmed to cause the raking of the wire segments 300 by the comb-like clamping wall structure 111a of the gripper 110, such that each wire segment is disposed into an associated wire receiving passageway between a respective pair of spaced apart clamping walls 111, as shown in **Figure 5B****.**

In one embodiment as shown, the controlled raking of the wire segments 300 by the comb-like clamping wall structure 110a comprises a displacement of said structure, beneath the pre-stripped wire segments 300 retained in the wire holder (dummy connector) 200, from bottom to top. That way, each wire segment 300 is correspondingly received from top to bottom in a respective one of the wire-receiving passages arranged between the pairs of spaced-apart adjacent clamping walls 111 of the comb-like clamping wall structure 110a. The one skilled in the art will appreciate that this is a non-limiting example because, conversely, in a variant the comb-like clamping wall structure 110a might be moved to approach the pre-stripped wire segments hold in the dummy connector 200, from the above, *i*.*e*. being displaced top to bottom, so that the wire segments 300 are correspondingly received, from bottom to top, in a the afore-mentioned wire-receiving passages. However, the example shown is preferable because the top-down insertion of the wire segments 300 into the wire-receiving passages between the adjacent clamping walls 111 takes advantage of gravity. The skilled person shall appreciate that this is all the more advantageous as the wire segments 300 are more flexible.

The gripper 110 further comprises at least one controllable actuator for automated actuation of the clamping walls 111 in the transverse direction of the Y-axis. A possible embodiment of this actuator shall be presented below, with reference to Figure 7. Said actuator, as well as the comb-like wall structure 111a of the gripper 110, are fixed to a robot arm 100, for instance a 6-axis robotic arm known in the art, for allowing the gripper 110 to grip the wire segments at the wire holder (or dummy connector) 200, and to move them in order to present stripped end of the wire segments to the splicing or welding machine 300 as illustrated in Figure 1.

The invention is not intended to be limited by the number and type of actuators used to provide the actuation of the movable clamping walls 111 of the gripper 110.

In preferred embodiments, one or more pneumatic linear actuators are used. These actuators offer the advantages of, inter alia, low cost, linear motion at fast actuation speeds. Their force to package size ratio is also better than electric actuators for moderate loads, which is important in clamping applications like the one considered in embodiments of the invention. Pneumatic type actuators use compressed air as input medium. More precisely, pneumatic linear actuators have pneumatic cylinders (also referred to as air cylinders) which are adapted to convert compressed air pressure (in the form of a cylinder stroke) into a linear motion of at least one actuating rod. Compressed air is available as a utility at almost every industrial facility.

Nevertheless, electric actuators such as linear motor electric actuators can be a potentially more favourable option in certain applications, due to technology advancements and reduced manufacturing costs of that alternative technology. Programmability is another key advantage of the electric actuators offer. Power sources are another reason why electric actuators can be more advantageous. Electricity, which is already needed for other aspects of an industrial facility, can be directly used to power electric actuators. On the contrary, pneumatic actuators require the installation of air compressors which can take up space in a facility and add costs. They can also be noisy, whereas limiting the noise within facilities helps improve the health of workers. Electric actuators, on the other hand, operate quietly.

With reference to **Figure 6A** and **Figure 6B****,** it shall now be presented a possible embodiment of the comb-like clamping wall structure 110a of the gripper 110.

In this embodiment, the central wall 111a is fixed, i.e. it does not move. The two end clamping walls 111b and 111c are able to move towards the centre of the comb-like clamping wall structure 110a, i.e. towards the fixed (i.e. non-moving) central clamping wall 111a. And so do the other, intermediate clamping walls 111d under the force indirectly applied to them by the end clamping walls 111b and 111c when they are actuated.

In one example, the gripper 110 can comprise a dual end-rod linear pneumatic actuator 170 as shown in **Figure 7****,** having at least two rods 171 and 172 extending laterally in opposite directions from a central pneumatic actuation unit 173. The two transversally end walls 111b and 111c belong to the pneumatic actuator 170 or are driven by it. To that end, they are operatively coupled to the distal end of rods 171 and 172, respectively.

Conventional actuators of this type, namely dual end-rod linear pneumatic actuator which are readily available on the market at low cost, usually have a rotary gear inside to force the two end plates to move at the same time, at the same speed and by the same distance. When a conventional actuator of this type is used, it is possible to remove the internal rotary gearing so that each end walls 111b and 111c can move freely, as far as the wire segments inside the gripper fork allow. Stated otherwise, when a constrained linear actuator readily available on the market is used, the geared mechanism is removed to provide an independent stroke for each of the opposing rods (or groups of rods). This allows great flexibility in gripping any number of wires, of any diameter within the limit of the maximum opening of the jaws.

Back to **Figure 6A** and **Figure 6B****,** the other intermediate walls 111d (*i*.*e*. the walls located between the fixed central wall 111a and the movable end walls 111b and 111c on either side thereof) of the comb-like clamping wall structure 110a are mobile and can float. They are therefore free to move in the transverse direction of the Y axis when the two end walls 111b and 111c are moved. The only direct constraint to which the intermediate walls 111d are subject is that, when the gripper is open, *i*.*e*. when the actuation of the end walls 111b and 111c by the actuator is stopped, the springs 115 force them to move away from the central fixed wall 111a against a respective stop 114 in order to guarantee a given distance, for example the same distance between them, in order to be ready to start a new operational cycle. The skilled person will appreciate that the exact positioning of all the movable walls in the open state of the clamp depends on the position of the stop 114 associated with them. Thus, depending on particular requirements in any specific application, this `safe' position of the movable clamping walls 111b, 111c and 111d can be such that the gap between any pair of adjacent walls 111 can be of any desired value. This offers the possibility of adapting to special cross-sections of the wires to be processed.

The skilled person will further appreciate that, advantageously, it is not necessary to use a sensor for sensing the position of the movable walls 111b and 111c, as it may be necessary in a closed loop control. The gripper 110 is simply forced to close or open, depending on whether the air pressure actuation is commanded or not, respectively, in the actuator 170. Absent any air pressure actuation by actuator 170, all the moving walls 111b, 111c and 111d are forced to return to their respective safe positions defined by stops 14, under the action by the return springs 115.

As schematically shown in **Figure 5A** already presented above, the pairs of adjacent walls 11 of the comb-like clamping wall structure 111a are initially spaced apart along the transverse direction of the Y-axis so that the width between uncompressed adjacent walls 111, that is the width of the corresponding open jaw is at least greater than the maximum cross-section of the wire segments 300 to be processed. Also, the spacing between the yaws formed by two adjacent walls 111 preferably matches the spacing between the wire segments 300 in the transverse direction of the Y-axis when positioned in the wire holder 200. Hence, the gripper 110 allows correct positioning within the comb-like structure 110a of each wire segment that is plugged in the wire holder 200.

In the shown examples, the initial spacing between pairs of clamping walls 11 adjacent along the transvers direction of the Y-axis is the same for all pairs. This is not restrictive, however, of the scope of the claims. Indeed, different spacings may be of particular interest in some specific applications depending, *inter alia,* of the lateral spacing of the wire segments 300 as they are plugged in the dummy connector 200. Stated otherwise, the N+1 walls of the comb-like structure 110a are initially laterally spaced one from the other so as to match the lateral spacing between the pre-stripped wire segments 300 in the transverse direction of the Y-axis, as they are positioned in the dummy connector 200. The jaws of the gripper 110 can thus be precisely positioned relative to each wire segment 300 plugged into the dummy connector, for the purpose of raking said wire segments.

The gripping of each wire segment 300 between one of the pairs of adjacent clamping walls 111 is achieved by reducing the mutual spacing between all the pairs of adjacent clamping walls by the actuation of the actuator 170. This actuation causes the rods 171 and 172 of the pneumatic actuator 170 to move the two walls 111b and 111c towards the fixed central wall 111a. The same applies to the other intermediate movable walls 111d, if any. This is achieved with power against the force of the return springs 115.

The skilled person will appreciate that the walls are adapted to press the wires in the transverse direction of the Y axis (see the horizontal arrows in the image). One advantage is that the gripper allows all the wires of the dummy connector to be grasped regardless of their respective cross-sections. For example, the initial spacing between pairs of adjacent walls is such that the gripper is able to grasp, in combination, wires with respective cross-sections ranging from 0.13 mm² to 2.5 mm². Another advantage is that the wires are brought closer together, making it easier to place the bundle of stripped wire segments to be spliced or welded in the splicing or welding zone (or chamber) of the splicing or welding machine 600 (see below).

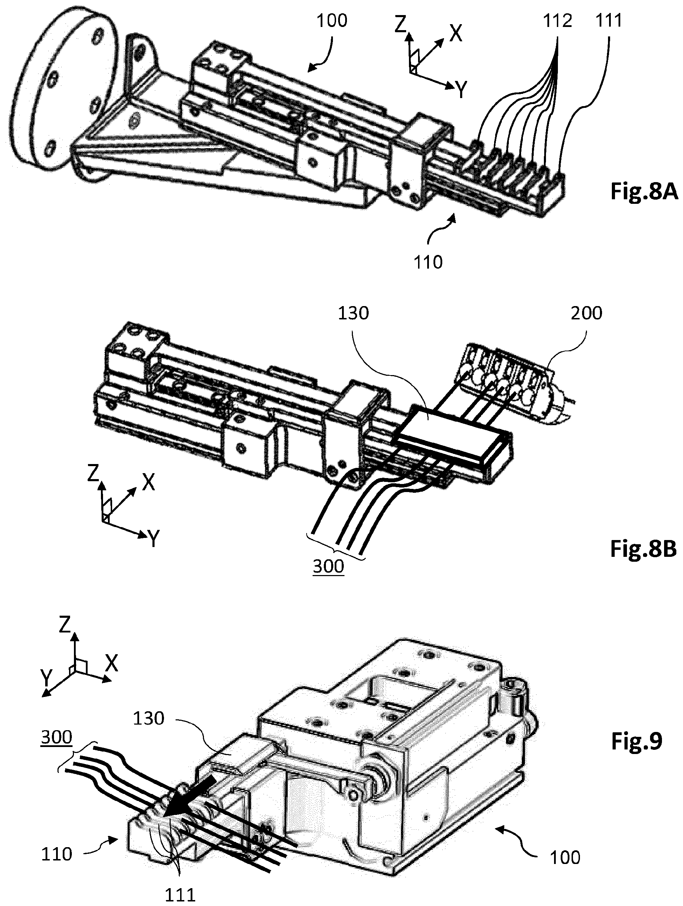

As shown in the isometric perspective view of **Figure 8A****,** the gripper 110 is carried by a robot arm 100 as shown, for instance it is fixed thereto, and comprises a comb-like clamping wall structure comprising a series of parallel longitudinally extending and transversely spaced clamping walls 111 and 112, each pair of adjacent clamping walls forming a wire receiving passageway in which a wire segment can be accommodated. The clamping walls are individually linearly movable along the transverse direction of the Y-axis so that the pairs of adjacent clamping walls form releasable jaws for releasably gripping a wire segment 300 near the pre-stripped end thereof.

As shown in Figure 8A, in an alternative embodiment, the gripper 110) further comprises a closing plate 130 which can be controlled to slide over the top of the comb-like clamping wall structure comprised of walls 111 and 112 of Figure 8A, to close the top of the wire-receiving passages after raking of the wire segments 300. This plate allows preventing the wire segments 300 from escaping from their associated wire-receiving passage during transverse movement of the clamping walls for gripping.

With reference to **Figure 9****,** in an optional embodiment, the clamp of Figure 8 may further comprise a closure plate 130 controlled to slide over the top of the comb structure with clamping walls 111 to close the top of the wire receiving passages after raking but prior to clamping. The function of this plate 130 is to prevent the wire segments 300 from escaping, upwards, from their associated wire-receiving passages, which could otherwise occur adversely due to transverse movement of the clamping walls 111 during the clamping step.

The closure plate 130 can be slidably actuated just after the ascending movement of the gripper is completed and prior to actuation of the clamping walls 111, for example by a dedicated air pressure actuator, from an open position at a proximal transverse end of the comb-like clamping structure, as illustrated in Figure 9, to a closed position, atop the clamping walls 111, at a distal transverse end of said comb-like clamping structure, as shown in Figure 8B. The dedicated air pressure actuator can be a double-acting double-end linear pneumatic air cylinder.

The plate 130 can be returned from the closed position to the open position once the wire segments 300 have been clamped between the clamping walls 111, *i.e.* just after these walls have been actuated. In such a situation, the closing plate 130 appears to be somewhat unnecessary, since there is no longer any risk of the wire segments escaping from the comb-shaped clamping structure once it has been locked. In a variant, however, it may be preferable to keep the closure plate 130 in the closed position until the clamp is operated to release the wire segments, after splicing or welding.

A robot arm 100 equipped with a gripper 110 as described in the foregoing can be used to bring electric wire segments to the machine for welding or splicing. It can be an automatic (*i*.*e*., operator independent) welding or splicing machine, which is configured to automatically assemble a set of wire segments.

The splicing or welding machine 600 can be, *e*.*g*., an ultrasonic welding (USW) machine. Ultrasonic metal welding is a type of friction welding in which oxide and other contaminants are broken down on the surface of the parts to be welded. The operational core of a splicing or welding machine comprises a sonotrode.

A sonotrode is a tool designed and configured to transmit ultrasonic vibrations and force required for ultrasonic welding (USW). It contains a transducer, for instance a piezoelectric transducer, which can be controlled to produce oscillations of e.g. 20 kHz, which are transformed into ultrasonic vibrations of the same frequency by a transmitter. More generally, the frequency of the vibrations may be comprised in the low-frequency ultrasound range, from 16 to 100 kHz. These vibrations are transmitted as power ultrasound to the metallic material of the stripped end portions of the wire segments to be assembled, which is in contact or at least in close vicinity with the transducer, to allow ultrasonic splicing or welding.

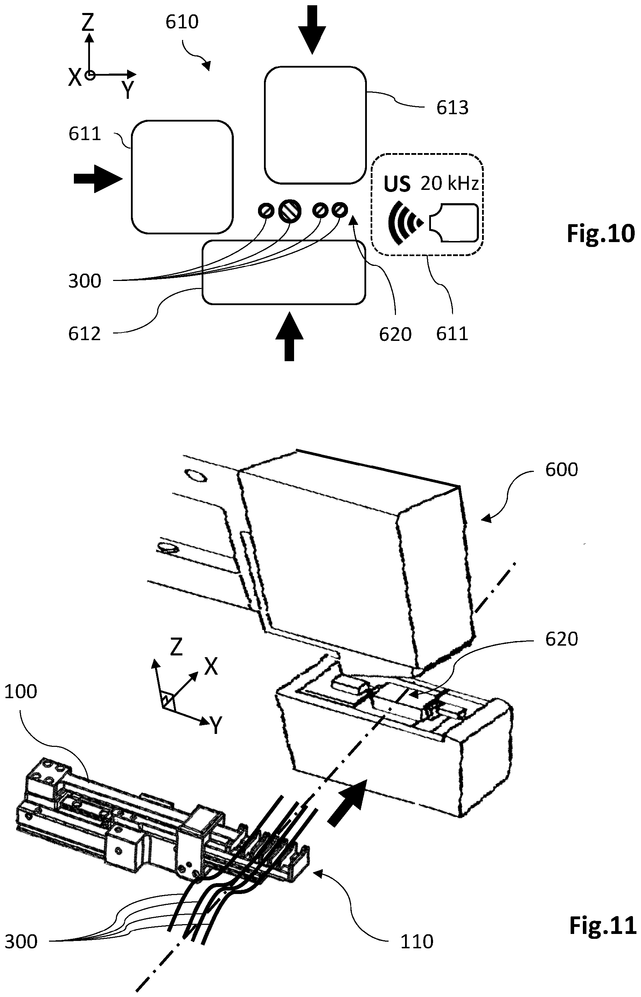

With reference to the schematic illustration of **Figure 10****,** the sonotrode 610 comprises an ultrasonic (US) transducer 611, and a plurality of movable clamping plates such as three clamping plates 612, 613 and 614 as shown. The parts to be welded, here the stripped end portions of the wire segments 300 as shown, are brought into a splicing or welding zone 620 in front of the US transducer 611. Being confined by the US transducer 611 and the plates 612, 613 and 614, said zone 620 may be referred to as a splicing or welding chamber. There, the stripped end portions of the wire segments 300 are pressed together, for instance under substantially uniform pressure, by moving the clamping plates 612, 613 and 614 in direction one to the others (as schematically illustrated by black arrows in Figure 10), and in direction of the US transducer 611. The transducer is then controlled to produce oscillations which are transformed into ultrasonic vibrations and are transmitted as power ultrasound to the stripped end portions of the wire segments 300 being processed, which are pressed by the clamping plates 612, 613 and 614 in front of the US transducer 611, to allow ultrasonic splicing or welding thereof. The result is a molecular bond of the metal portions of the stripped ends of the wire segments 300 that is precise, highly resistant and extremely reliable.

**Figure 11** shows partially a splicing or welding machine as diagrammatically illustrated in Figure 10, in a context of use with the robotic arm 100 of Figure 8A.

It will be appreciated that the splices may be butt splices or dual end splices. In the case of a dual end splice, the stripped ends of a first set of wire segments can be brought into the splicing or welding zone 620 by the gripper 110 under the control of the robotic arm 100, on one side of the longitudinal direction of the X axis (which is illustrated by the dotted line in Figure 11), and the stripped ends of a second set of wire segments are brought into said splicing or welding zone 620 from the other side of the longitudinal direction of the X axis, for example by the same gripper during another operating cycle.

To summarize, the gripper 110 according to embodiments as described in the foregoing can be used in a number of ways to improve quality in terms of defects associated with the positioning of wires, not only during stripping when the wire segments are pulled out from the receiving portions 230 of the dummy connector 200, but also for splicing or welding, in particular during transport from the dummy connector 200 to the splicing or welding zone 620 of the splicing or welding machine 600. The stripped end portions of the wire segments 300 are introduced into the splicing or welding zone 620 longitudinally aligned and laterally ranked as they were in the dummy connector.

Stated otherwise, longitudinal alignment and lateral positioning of the different wires is preserved during the whole process, thanks to the fact that one and the same toll, namely the gripper according to embodiments, is involved. In addition, the gripper allows elimination of manpower on splicing or welding of wires segments, which reduces the risk of quality problems, since good precision in operator independent wire positioning in the welding area since (both lateral positioning and longitudinal end alignment of the different wires is achieved. Further, use of the gripper according to embodiments allows shorter cycle time.

While there has been illustrated and described what are presently considered to be the preferred embodiments of the present invention, it will be understood by those skilled in the art that various other modifications may be made, and equivalents may be substituted, without departing from the true scope of the claims. Additionally, many modifications may be made to adapt a particular situation to the teachings of the present disclosure without departing from the central inventive concept described herein. Furthermore, an embodiment of the present invention may not include all of the features described above. Therefore, it is intended that the proposed solution be not limited to the particular embodiments disclosed, but includes all embodiments falling within the scope of the appended claims.

A person skilled in the art will readily appreciate that various parameters disclosed in the description may be modified and that various embodiments disclosed and/or claimed may be combined without departing from the scope of the solution as claimed.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa. Finally, it is stipulated that the reference signs in the claims do not limit the scope of the claims but are merely inserted to enhance the legibility of said claims.

## Claims

1. A robotic wire gripper for gripping segments (300) of sheathed electrical wire and presenting them to a splicing or welding machine (300), said wire gripper (110) comprising:
- a comb-like clamping wall structure (110a) comprising a series of parallel longitudinally extending and transversely spaced clamping walls, each pair of adjacent clamping walls forming a wire receiving passageway in which a wire segment can be accommodated, said clamping walls being individually linearly movable along a transverse direction so that the pairs of adjacent clamping walls form releasable jaws for releasably gripping a wire segment near the pre-stripped end thereof,
- at least one controllable actuator (170) for automated actuation of the clamping walls (111) of the comb-like clamping wall structure in the transverse direction,
- a robot arm (100) to which the comb-like wall structure (111a) and the actuator (170) are fixed,
- a controller programmed to cause:
∘ the controlled displacement of the wire gripper (110) by the robot arm (100) towards a wire holder (200) in which are accommodated a plurality of pre-stripped wire segments (3000) aligned in a row,
∘ the controlled raking of the wire segments (300) by the comb-like clamping wall structure (111a) such that each wire segment is disposed into an associated wire receiving passageway between a respective pair of spaced apart clamping walls (111),
∘ the controlled and releasable gripping of each of said wire segments between a pair of adjacent clamping walls (111), by reducing the mutual spacing between all pairs of adjacent clamping walls through actuation of the actuator (170),
∘ the simultaneous controlled extraction by the robot arm (100) of all the wire segments (300) from the wire support (200) once the said wire segments are pressed by the clamping walls (111) of the gripper (110) while the end part of the sheath (305) of the wire segments is retained in the said wire support, so that the wires are all stripped at the same time when they are withdrawn from the wire support (200) by the gripper (110), and
∘ the presentation, by the robot arm (100), of the stripped wire segments (300) still gripped in the comb-like clamping wall structure (110a) to the splicing or welding machine (600) away from the wire holder (200),, which preserves the longitudinal alignment and the parallel extension of the wire segments (300).

2. The robotic wire gripper of claim 1, wherein the controllable actuator (170) is a pneumatic actuator.

3. The robotic wire gripper of claim 1 or claim 2, wherein the controllable actuator (170) is a single-acting actuator, and wherein said wire gripper (110) comprises at least one spring (115) arranged to force the return stroke of the clamping walls (111) when actuation of said walls is stopped.

4. The robotic wire gripper of claim 3, wherein said gripper (110) comprises fixed stops (114) against which the clamping walls (111a, 111b,111c, 111d) are pushed by the springs (15) when actuation by the actuator (170) is stopped, so that a determined distance along the transverse direction is obtained between adjacent clamping walls, preferably the same distance for all pairs of adjacent clamping walls.

5. The robotic wire gripper of any one of claims 1 to 4, wherein the controlled raking of the wire segments (300) by the comb-like clamping wall structure (110a) comprises a displacement of said comb-like clamping structure, beneath the pre-stripped wire segments (300) retained in the wire holder (200), preferably from bottom to top such that each wire segment (300) is correspondingly received from top to bottom in a respective wire-receiving passage between a pair of spaced-apart adjacent clamping walls (111) of the comb-like clamping wall structure (110a).

6. The robotic wire gripper of claim 5, wherein said gripper (110) further comprises a closing plate (130) controlled to slide over the top of the comb-like clamping wall structure to close the top of the wire-receiving passages after raking of the wire segments (300), to prevent said wire segments from escaping from their associated wire-receiving passage during transverse movement of the clamping walls for gripping.

7. An automatic splicing or welding installation comprising:
- a wire holder (200) adapted to hold, in a pre-stripped state, a set of wire segments (300) plugged in in a given longitudinal alignment and determined parallel extensions,
- an automatic splicing or welding machine (600) separate from the wire holder (200),
- a robotic arm (100) equipped with a robotic gripper according to one of claims 1 to 6, for gripping pre-stripped wire segments in the wire holder (200), stripping the wire segments by forcibly withdrawing them from said wire holder, and bringing the stripped wire segments to the splicing or welding machine for splicing or welding them, while preserving the longitudinal alignment and the parallel extension of said wire segments (300).

8. Method of presenting segments (300) of sheathed electrical wire and presenting them to a splicing or welding machine (300), said method comprising using a robotic wire gripper (110) as claimed in any one of claims 1 through 7 for gripping the wire segments.
